# EUROPEAN PATENT APPLICATION

(11) **EP 4 807 411 A1**
(43) Date of publication of application: **16.09.2026**
(21) Application number: 25896753.8
(22) Date of filing: 25.07.2025
(51) Int. Cl.: G02B 6/02

(54) **RARE EARTH-DOPED ANTI-RESONANT HOLLOW-CORE OPTICAL FIBER**

(30) Priority: 28.11.2024 CN 202411719427
(71) Applicant: Zhongtian Technology Advanced Materials Co., Ltd., Nantong, Jiangsu 226000 (CN); Fudan University, Shanghai 200433 (CN); Jiangsu Zhongtian Technology Co., Ltd., Nantong, Jiangsu 226000 (CN)
(72) Inventor: QIN, Yu, Nantong, Jiangsu 226000 (CN); ZHU, Jie, Nantong, Jiangsu 226000 (CN); ZHANG, Junyi, Nantong, Jiangsu 226000 (CN); SHEN, Yichun, Nantong, Jiangsu 226000 (CN); XIAO, Limin, Shanghai 200433 (CN); CHEN, Yali, Nantong, Jiangsu 226000 (CN); JIANG, Xinli, Nantong, Jiangsu 226000 (CN)
(74) Representative: J A Kemp LLP
(86) International application number: PCT/CN2025/110543
(87) International publication number: WO 2026/113455

(57) **Abstract**

The present application relates to the technical field of optical fibers, in particular to a rare-earth-doped anti-resonant hollow-core optical fiber. The rare-earth-doped anti-resonant hollow-core optical fiber includes a cladding and a plurality of anti-resonant tubes, where the cladding includes a first refractive tube and a rare-earth-doped tube sleeved on the first refractive tube; the anti-resonant tubes are sequentially arranged at intervals on an inner wall of the first refractive tube, and the anti-resonant tubes collectively enclose a fiber core region, and the fiber core region is configured to transmit laser; the rare-earth-doped tube is configured to amplify the laser, and the first refractive tube is configured to couple the amplified laser into the fiber core region. The rare-earth-doped anti-resonant hollow-core optical fiber provided by the present application can achieve laser gain and reduce the possibility of occurrence of mode instability during the process of laser transmission.

## Description

This application claims priority to Chinese Patent Application No. 202411719427.7, filed with the China National Intellectual Property Administration on November 28, 2024, and entitled "RARE-EARTH-DOPED ANTI-RESONANT HOLLOW-CORE OPTICAL FIBER", which is hereby incorporated by reference in its entirety.

### TECHNICAL FIELD

The present application relates to the technical field of optical fibers, and in particular to a rare-earth-doped anti-resonant hollow-core optical fiber.

### BACKGROUND

Optical fiber lasers are lasers that use rare-earth-doped optical fibers as gain media. They have been widely used in industrial manufacturing, medical and other fields due to their advantages such as high electro-optical conversion efficiency, good beam quality and small size.

In the prior art, rare-earth-doped optical fiber typically involves doping one or more rare-earth elements into a high-purity silica matrix to form a rare-earth layer. A laser gain is achieved through the gain mechanism induced by the doped rare-earth elements and the amplified laser propagates within the rare-earth layer.

However, the laser causes heating of the rare-earth layer, resulting in non-uniform density of the rare-earth layer and thereby giving rise to a mode instability effect.

### SUMMARY

The present application provides a rare-earth-doped anti-resonant hollow-core optical fiber, which can achieve laser gain and reduce the possibility of occurrence of mode instability during the process of laser transmission.

The rare-earth-doped anti-resonant hollow-core optical fiber provided by the present application includes a cladding and a plurality of anti-resonant tubes, where the cladding includes a first refractive tube and a rare-earth-doped tube sleeved on the first refractive tube;
the anti-resonant tubes are sequentially arranged at intervals on an inner wall of the first refractive tube, and the anti-resonant tubes collectively enclose a fiber core region, and the fiber core region is configured to transmit laser.

The rare-earth-doped tube is configured to amplify the laser, and the first refractive tube is configured to couple the amplified laser into the fiber core region.

In a possible implementation, in the rare-earth-doped anti-resonant hollow-core optical fiber provided by the present application, an axial direction of each anti-resonant tube is parallel to an axial direction of the first refractive tube, and the anti-resonant tubes are sequentially and uniformly arranged at intervals around a circumferential direction of the first refractive tube.

In a possible implementation, in the rare-earth-doped anti-resonant hollow-core optical fiber provided by the present application, the first refractive tube is a germanium-doped tube.

In a possible implementation, in the rare-earth-doped anti-resonant hollow-core optical fiber provided by the present application, a content of element germanium in the germanium-doped tube decreases gradually from an outer side to an inner side of the germanium-doped tube.

In a possible implementation, in the rare-earth-doped anti-resonant hollow-core optical fiber provided by the present application, the anti-resonant tubes are greater than or equal to 4 and less than or equal to 16 in number.

In a possible implementation, in the rare-earth-doped anti-resonant hollow-core optical fiber provided by the present application, the cladding further includes a second refractive tube and a coating layer, the second refractive tube is sleeved on the rare-earth-doped tube, and the coating layer is arranged on an outer surface of the second refractive tube.

A pure quartz layer is provided between the rare-earth-doped tube and the second refractive tube, and the second refractive tube and the pure quartz layer are configured to reflect pump light.

In a possible implementation, in the rare-earth-doped anti-resonant hollow-core optical fiber provided by the present application, the second refractive tube is a fluorine-doped quartz tube.

In a possible implementation, in the rare-earth-doped anti-resonant hollow-core optical fiber provided by the present application, an outer wall of the fluorine-doped quartz tube is polygonal.

In a possible implementation, in the rare-earth-doped anti-resonant hollow-core optical fiber provided by the present application, the coating layer includes a first coating layer and a second coating layer, and the first coating layer is located on a side of the second coating layer close to the second refractive tube.

In a possible implementation, in the rare-earth-doped anti-resonant hollow-core optical fiber provided by the present application, the first coating layer is a fluorine-doped acrylic resin layer, and the second coating layer is an acrylic resin layer.

The rare-earth-doped anti-resonant hollow-core optical fiber provided by the present application is provided with the cladding and the plurality of anti-resonant tubes, where the cladding includes the first refractive tube and the rare-earth-doped tube sleeved on the first refractive tube. The plurality of anti-resonant tubes are sequentially arranged at intervals on the inner wall of the first refractive tube, and the plurality of anti-resonant tubes collectively enclose the fiber core region which is used for laser transmission. Since the space inside the fiber core region is filled with air, the fiber core region can reduce nonlinear effects and ensure the stability of laser transmission. The rare-earth-doped tube is used for amplifying the laser and can achieve laser gain. The first refractive tube is used for coupling the amplified laser into the fiber core region, so that the laser propagates in the fiber core region, avoiding the laser propagating on the rare-earth-doped tube, thereby reducing the possibility of unstable propagation mode. Therefore, the rare-earth-doped anti-resonant hollow-core optical fiber provided by the present application can achieve laser gain and reduce the possibility of occurrence of mode instability during the process of laser transmission.

### BRIEF DESCRIPTION OF DRAWINGS

In order to more clearly illustrate the technical solutions in the embodiments of the present application or in the prior art, the drawings required for use in the description of the embodiments or the prior art will be briefly introduced below. Obviously, the drawings described below are some embodiments of the present application. For those of ordinary skill in the art, other drawings can be obtained based on these drawings without paying creative effort.
FIG. 1 is a structural schematic diagram of a rare-earth-doped anti-resonant hollow-core optical fiber provided by an embodiment of the present application.
FIG. 2 is a schematic diagram of a refractive index of a rare-earth-doped anti-resonant hollow-core optical fiber provided by an embodiment of the present application.
FIG. 3 is a transmission loss spectrum diagram of an ytterbium-doped anti-resonant hollow-core optical fiber provided by an embodiment of the present application.
FIG. 4 is a transmission loss spectrum diagram of an erbium-doped anti-resonant hollow-core optical fiber provided by an embodiment of the present application.
FIG. 5 is a transmission loss spectrum diagram of a thulium-doped anti-resonant hollow-core optical fiber provided by an embodiment of the present application.

Description of reference signs:
100, cladding; 110, first refractive tube; 120, rare-earth-doped tube; 130, pure quartz layer; 140, second refractive tube; 150, coating layer; 151, first coating layer; 152, second coating layer;
200, anti-resonant tube;
300, fiber core region.

Specific embodiments of the present application have been shown by the above-mentioned drawings, which will be described in more detail hereinafter. These drawings and written descriptions are not intended to limit the scope of the conception of the present application in any way, but rather to illustrate the conception of the present application to those skilled in the art with reference to specific embodiments.

### DESCRIPTION OF EMBODIMENTS

First, those skilled in the art should understand that these implementations are only used for explaining the technical principles of the present application and are not intended to limit the protection scope of the present application. Those skilled in the art may make adjustments to them as needed to adapt to specific application scenarios.

Second, it should be noted that, in the description of the present application, unless otherwise expressly specified and limited, the terms "mount", "connect", and "couple" should be understood in a broad sense, for example, it may be a fixed connection, it may be an indirect connection through an intermediate medium, or it may be an internal communication between two elements or an interaction relationship between two elements. For those skilled in the art, the specific meanings of the above terms in the present application may be understood according to specific circumstances.

Then, it should also be noted that, in the description of the present application, the orientations or position relationships indicated by the terms "upper", "lower", "front", "back", "vertical", "horizontal", "top", "bottom", "inner", "outer", etc., are based on the orientations or position relationships shown in the drawings. These terms are only for the convenience of describing the present application and simplifying the description, and do not indicate or imply that the device or element referred to must have a specific orientation, or be constructed and operated in a specific orientation, and therefore cannot be understood as limiting the present application.

In addition, the terms "first" and "second" are merely used for descriptive purposes and shall not be understood as indicating or implying relative importance or implicitly specifying the number of the indicated technical features. Thus, a feature defined with "first" or "second" may explicitly or implicitly include one or more such features. In the description of the present application, unless otherwise specified, "a plurality of" means two or more.

As shown in the background, in the prior art, rare-earth-doped optical fiber typically involves doping one or more rare-earth elements into a high-purity silica matrix to form a rare-earth layer. A laser gain is achieved through the gain mechanism induced by the doped rare-earth elements and the amplified laser propagates in the rare-earth layer. However, the laser causes heating of the rare-earth layer, resulting in non-uniform density of the rare-earth layer and thereby giving rise to the mode instability effect.

Based on this, the rare-earth-doped anti-resonant hollow-core optical fiber provided by the present application includes a cladding and a plurality of anti-resonant tubes, and the cladding includes a first refractive tube and a rare-earth-doped tube sleeved on the first refractive tube. The plurality of anti-resonant tubes are sequentially arranged at intervals on an inner wall of the first refractive tube, and the plurality of the anti-resonant tubes collectively enclose a fiber core region, which is used for transmitting laser. Since the space inside the fiber core region is filled with air, the fiber core region can reduce nonlinear effects and ensure the stability of laser transmission. The rare-earth-doped tube is used for amplifying the laser and can achieve laser gain. The first refractive tube is used for coupling the amplified laser into the fiber core region so that the laser propagates in the fiber core region, avoiding the laser propagating on the rare-earth-doped tube, thereby reducing the possibility of unstable propagation mode. Therefore, the rare-earth-doped anti-resonant hollow-core optical fiber provided by the present application can achieve laser gain and reduce the possibility of occurrence of mode instability during the process of laser transmission.

In order to make the objectives, technical solutions and advantages of the present application clearer, the technical solutions in the embodiments of the present application will be described in more detail below in conjunction with the drawings of the preferred embodiments of the present application. In the drawings, the same or similar reference signs consistently represent the same or similar components or components having the same or similar functions. The described embodiments are part of the embodiments of the present application, not all of the embodiments. The embodiments described below with reference to the drawings are exemplary and are intended to be used for explaining the present application, but shall not be construed as limiting the present application. Based on the embodiments in the present application, all other embodiments obtained by persons of ordinary skill in the art without creative efforts shall fall within the protection scope of the present application.

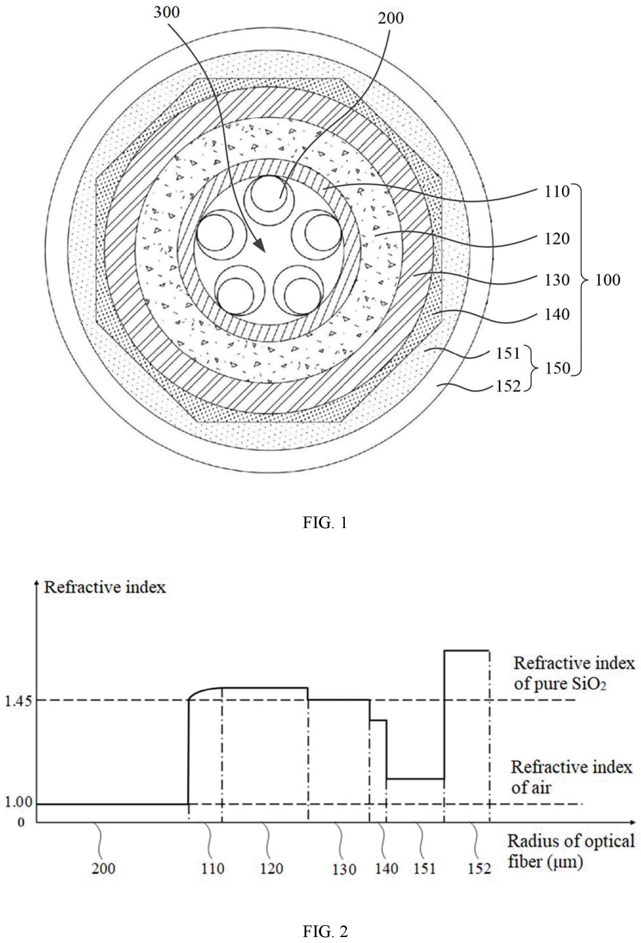

Referring to FIG. 1, a rare-earth-doped anti-resonant hollow-core optical fiber provided by the present application includes a cladding 100 and a plurality of anti-resonant tubes 200. The cladding 100 includes a first refractive tube 110 and a rare-earth-doped tube 120 sleeved on the first refractive tube 110.

The plurality of anti-resonant tubes 200 are sequentially arranged at intervals on an inner wall of the first refractive tube 110, and the plurality of anti-resonant tubes 200 collectively enclose a fiber core region 300, and the fiber core region 300 is used for transmitting laser.

The rare-earth-doped tube 120 is used for amplifying laser, and the first refractive tube 110 is used for coupling the amplified laser into the fiber core region 300.

It should be noted that the anti-resonant tube 200 is made of pure quartz, and the anti-resonant tube 200 may be a circular tube structure or a nested circular tube structure. Inscribed circles of the anti-resonant tubes 200 define the fiber core region 300, and both the fiber core region 300 and the space inside the anti-resonant tube 200 are filled with air. Compared with the conventional solid-core optical fiber that transmits an optical signal through glass or other materials, the glass or other materials inevitably causing optical loss and being prone to generating nonlinear effects, since the absorption and scattering losses of air are much lower than those of glass and other materials, the fiber core region 300 of the present application, which is air-filled, can reduce optical loss and increase signal transmission speed. In high-power optical transmission, nonlinear effects (such as self-phase modulation, cross-phase modulation, and four-wave mixing, etc.) will affect signal quality. The nonlinear coefficient of air is much lower than that of materials such as glass; therefore, the air-filled fiber core region 300 can mitigate these nonlinear effects, ensure the stability of laser transmission, and improve signal quality.

It should also be noted that a material of the rare-earth-doped tube 120 is rare-earth-doped quartz material. Rare-earth elements have a specific energy level structure, and rare-earth ions can be excited to a high-energy level state through optical pumping (typically using a laser diode). When signal light passes through, the rare-earth ions in the high-energy level state release energy, thereby amplifying the signal light and achieving laser gain. Since the rare-earth doping amount is stable and controllable and the doping area is large, high optical conversion efficiency and high absorption performance of the cladding 100 can be achieved.

By arranging the first refractive tube 110 in the rare-earth-doped tube 120, the first refractive tube 110 may realize the grazing-incidence coupling of the laser from a side of the cladding 100, so that the laser propagates in the fiber core region 300, avoiding the laser propagating on the rare-earth-doped tube 120, thereby reducing the possibility of propagation mode instability. Therefore, the rare-earth-doped anti-resonant hollow-core optical fiber provided by the present application realizes the functions of laser gain and laser transmission, and the output laser does not cause photo-induced heating of the rare-earth-doped tube 120, thereby achieving high-power laser output while being less prone to mode instability.

It should also be noted that when the rare-earth-doped anti-resonant hollow-core optical fiber provided by the present application is applied to a laser device, a high-reflectivity grating and a low-reflectivity grating are butt-coupled to a front end thereof and a rear end thereof respectively, to form laser output. However, since pump light fails to satisfy the anti-resonance condition, a portion of the pump light leaking into the cladding 100 of the optical fiber can be filtered out from the cladding 100 during subsequent output.

In some embodiments, referring to FIG. 1, an axial direction of each anti-resonant tube 200 is parallel to an axial direction of the first refractive tube 110, and the anti-resonant tubes 200 are uniformly spaced in sequence around a circumferential direction of the first refractive tube 110.

It can be understood that the uniformly spaced arrangement of the anti-resonant tubes 200 can reduce the loss of laser during the process of transmission, thereby improving the transmission efficiency of the rare-earth-doped anti-resonant hollow-core optical fiber.

The uniformly spaced anti-resonant tubes 200 also help stabilize the transmission mode in the optical fiber, further reducing the possibility of mode instability.

In some embodiments, referring to FIG. 1, the first refractive tube 110 is a germanium-doped tube.

The first refractive tube 110 is a germanium-doped tube. In a specific implementation, a germanium-doped quartz material may be deposited on an inner wall of a pure quartz substrate tube, and then the pure quartz substrate tube is cut and ground. The grinding is performed to a thickness equal to that of the pure quartz substrate tube, leaving only the deposit after grinding, thereby completing the preparation of the germanium-doped tube.

It should be noted that the germanium-doped quartz material, i.e., quartz doped with germanium element, can increase the refractive index of the first refractive tube 110 so as to couple the laser into the fiber core region 300 for propagation.

In some embodiments, referring to FIG. 1, a content of element germanium in the germanium-doped tube gradually decreases from an outer side to an inner side of the germanium-doped tube.

Specifically, the content of element germanium gradually decreases from the outer side to the inner side of the germanium-doped tube, resulting in a gradual decrease in the refractive index of the first refractive tube 110 from the outer side to the inner side. That is, the first refractive tube 110 is a gradient-index tube, which allows laser to be grazing-incidence coupled from the side of the cladding 100, thereby further optimizing the coupling and transmission characteristics of the laser.

It should be noted that when the germanium-doped quartz material is deposited on the inner wall of the pure quartz substrate tube, the content of germanium in the germanium-doped quartz material may be gradually reduced so as to achieve a sequential reduction in the content of the element germanium in the germanium-doped tube.

It should also be noted that both the outer wall and the inner wall of the first refractive tube 110 may be circular.

In some embodiments, the rare-earth-doped tube 120 contains a rare-earth element, and the rare-earth element has a total concentration of 300 ppm to 5000 ppm.

It can be understood that the rare-earth-doped tube 120 contains a rare-earth element, the rare-earth element can achieve the effect of optical amplification and laser gain in the optical fiber. In a specific implementation, the rare-earth-doped tube 120 may include a rare-earth element such as ytterbium, erbium, thulium and holmium, or other rare-earth element. There is no particular limitation on this in the embodiments of the present application.

It should be noted that both the outer wall and the inner wall of the rare-earth-doped tube 120 may be circular.

In a specific implementation, the concentration of the rare-earth element may be determined according to the type of the rare-earth element, so that the rare-earth-doped tube 120 can achieve the effect of laser gain.

In some embodiments, referring to FIG. 1, the number of the anti-resonant tubes 200 is greater than or equal to 4 and less than or equal to 16.

It can be understood that, through the anti-resonance effect, the tube wall of the anti-resonant tube 200 can reflect light of a specific wavelength, confining the laser transmission within the fiber core region 300. The number of the anti-resonant tubes 200 ranges from 4 to 16, which can provide a good confinement effect, reduce the leakage of laser to the cladding 100, thereby lowering the transmission loss, achieving good transmission effect of the optical fiber, and ensuring easy fabrication of the optical fiber.

Specifically, the anti-resonant tubes 200 may be uniformly attached to the inner wall of the first refractive tube 110 at an equal interval, and the anti-resonant tubes 200 are not in contact with each other.

In some embodiments, referring to FIG. 1, the cladding 100 also includes a second refractive tube 140 and a coating layer 150. The second refractive tube 140 is sleeved on the rare-earth-doped tube 120, and the coating layer 150 is arranged on the outer surface of the second refractive tube 140.

A pure quartz layer 130 is arranged between the rare-earth-doped tube 120 and the second refractive tube 140. The second refractive tube 140 and the pure quartz layer 130 are configured to reflect the pump light.

The second refractive tube 140 is arranged on an outer surface of the pure quartz layer 130, so that most of the pump light is reflected at an interface between the pure quartz layer 130 and the second refractive tube 140, thus reducing the reflection of high-power-density pump light at an interface between the fragile coating layer 150 and the second refractive tube 140, avoiding the impact of high-power-density energy on the coating layer 150, and thereby improving the stability and reliability of optical fiber transmission.

In some embodiments, referring to FIG. 1, the second refractive tube 140 is a fluorine-doped quartz tube.

It can be understood that the second refractive tube 140 is a fluorine-doped quartz tube, that is, a material of the second refractive tube 140 is a fluorine-doped quartz material. The refractive index of the fluorine-doped quartz tube is lower than that of the pure quartz tube, so that the fluorine-doped quartz tube can form a more effective beam confinement structure, allowing most of the pump light to be reflected at an interface between the pure quartz layer 130 and the second refractive tube 140.

In some embodiments, referring to FIG. 1, the outer wall of the fluorine-doped quartz tube is polygonal.

The outer wall of the fluorine-doped quartz tube is polygonal, that is, the outer wall of the fluorine-doped quartz tube has a plurality of edges. For example, the outer wall of the fluorine-doped quartz tube may have 5 to 10 edges, and there is no particular limitation on this in the embodiments of the present application. It can be understood that the shape of polygon can enhance the reflection effect and further confine the pump light to be reflected at the interface between the pure quartz layer 130 and the second refractive tube 140.

It should be noted that the inner wall of the fluorine-doped quartz tube may be circular.

In some embodiments, referring to FIG. 1, the coating layer 150 includes a first coating layer 151 and a second coating layer 152, and the first coating layer 151 is located on a side of the second coating layer 152 close to the second refractive tube 140.

It can be understood that a double-layer coating composed of the first coating layer 151 and the second coating layer 152 can enhance the mechanical strength and durability of the optical fiber.

In some embodiments, referring to FIG. 1, the first coating layer 151 is a fluorine-doped acrylic resin layer, and the second coating layer 152 is an acrylic resin layer.

Specifically, the first coating layer 151 is a fluorine-doped acrylic resin layer, which has excellent chemical corrosion resistance and can effectively protect the optical fiber from corrosion by chemical substances, and improve the service life of the optical fiber in a harsh environment. In addition, the fluorine-doped acrylic resin layer also has good moisture resistance, which can prevent moisture from penetrating into the interior of the optical fiber and safeguard the optical performance of the optical fiber. The second coating layer 152 is an acrylic resin layer with superior UV resistance, which can protect the optical fiber from damage by ultraviolet radiation, and extend the service life of the optical fiber.

In some embodiments, the fiber core region 300 may have a diameter of 10-120 µm, and a ratio of an outer diameter of the anti-resonant tube 200 to the diameter of the fiber core region 300 may be 0.3-1.2, and a ratio of an inner diameter of the anti-resonant tube 200 to a radius of the fiber core region 300 may be 0.1-1. A wall thickness of the anti-resonant tube 200 may range from 0.1 µm to 3 µm, and a specific value of the wall thickness is determined by the following method:
when the wall thickness satisfies an anti-resonance condition for laser: ${t}_{1} = \frac{{λ}_{1} ⋅ \left(2{m}_{1}-1\right)}{4 \sqrt{{n}^{2} - 1}}$, t₁ is an anti-resonant wall thickness, λ₁ is a wavelength of excitation light, m₁ is an anti-resonant layer order, where m₁ = 1, 2, 3, ..., generally not greater than 5, and *n* is a refractive index of the anti-resonant ring;
when the wall thickness satisfies a resonance condition for pump light: ${t}_{2} = \frac{{λ}_{2} ⋅ {m}_{2}}{2 \sqrt{{n}^{2} - 1}}$, t₂ is a resonant wall thickness, λ₂ is a wavelength of the pump light, m₂ is a resonant layer order, where m₂ = 1, 2, 3, ..., generally not greater than 5, *n* is a refractive index of the anti-resonant ring. m₁ and m₂ are each selected from integers ranging from 1 to 5 (m₁ and m₂ are not necessarily equal). When the difference between t₁ and t₂ is minimized, the wall thickness t₁ determined by the value of m₁ at this point is taken as the wall thickness of the anti-resonant tube 200.

The relationship between the refractive index *n* at different radial thicknesses from the outer side to the inner side of the first refractive tube 110 and the thickness *r* may be described by the following formula: $n = \sqrt{{n}_{0}^{2} \left[1-2Δ{\left(\frac{r}{a}\right)}^{2}\right]}$, where, n₀ is a refractive index of an outermost layer of the first refractive tube 110, *a* is a thickness of the first refractive tube 110 from the inside to the outside, Δ is a difference between the refractive index of the outermost layer and a refractive index of an innermost layer of the first refractive tube 110.

It should be noted that the refractive index of the outermost side of the first refractive tube 110 is not lower than the refractive index of the rare-earth-doped tube 120, and their relative difference may range from 0 to 0.004. The refractive index difference between the rare-earth-doped tube 120 and pure quartz may be 0.0001-0.01. The refractive index of the second refractive tube 140 is lower than the refractive index of the pure quartz layer 130, with a relative difference of not less than 0.014. The refractive index of the first coating layer 151 (fluorine-doped acrylic resin layer) is lower than the refractive index of the pure quartz layer 130, with a relative difference of not less than 0.08.

In some embodiments, the inner diameter of the first refractive tube 110 may be 30-215 µm, the outer diameter of the first refractive tube 110 is 37-260 µm, the outer diameter of the rare-earth-doped tube 120 is 55-375 µm, the outer diameter of the pure quartz layer 130 is 65-465 µm, a distance between two opposite edges of the second refractive tube 140 is 70-490 µm, the outer diameter of the first coating layer 151 is 85-590 µm, and the outer diameter of the second coating layer 152 is 95-645 µm.

It should be noted that the thickness of the first refractive tube 110 is not less than 10 µm, the thickness of the rare-earth-doped tube 120 is not less than 20 µm, a thickness from an outer wall of the second refractive tube 140 to the pure quartz layer 130 is not less than 5 µm, a thickness between the first coating layer 151 and the outer wall of the second refractive tube 140 is not less than 20 µm, and a thickness of the second coating layer 152 is not less than 15 µm.

A method for preparing the rare-earth-doped anti-resonant hollow-core optical fiber provided by the present application includes the following steps.

S101, preparing a rare-earth-doped tube 120 and a first refractive tube 110.

Specifically, to prepare the rare-earth-doped tube 120, a pure quartz substrate tube may be mounted on MCVD equipment, and then a rare-earth-doped quartz material may be deposited on an inner wall of the pure quartz substrate tube using a "liquid-phase method" or a "vapor-phase method", so that the deposited rare-earth-doped quartz material forms the rare-earth-doped tube 120.

It should be noted that the MCVD method is an improved chemical vapor deposition method, and the MCVD equipment is a complete set of devices for manufacturing an optical fiber preform using the MCVD process. The MCVD method and MCVD equipment are technologies well-known to those skilled in the art and will not be described in detail.

When the cladding 100 includes the second refractive tube 140, it is necessary to prepare the second refractive tube 140. Specifically, another pure quartz substrate tube may be mounted on PCVD equipment, and an appropriate amount of silicon tetrachloride, oxygen and fluoride gas (any one or more of hexafluoroethane, sulfur hexafluoride, and carbon tetrafluoride) are introduced into the pure quartz substrate tube to form a deep fluorine-doped layer on the inner wall of the pure quartz substrate tube. The deep fluorine-doped layer is the second refractive tube 140.

It should be noted that the PCVD method is a plasma chemical vapor deposition method, and the PCVD equipment is a plasma chemical vapor deposition device. The PCVD method and PCVD equipment are technologies well-known to those skilled in the art and will not be described in detail.

The second refractive tube 140 is sleeved on the rare-earth-doped tube 120 and mounted on a glass lathe for melting and shrinking. The heating mode for melting and shrinking includes one of a graphite heating furnace, an induction heating furnace and an annular gas torch. A gap between the rare-earth-doped tube 120 and the second refractive tube 140 is evacuated during melting and shrinking to ensure tight fusion between the two tubes. After the rare-earth-doped tube 120 and the second refractive tube 140 are melted and shrunk, the outer surfaces thereof are ground into regular polygons to form a rare-earth-doped sleeve, and the pure quartz substrate tube located between the rare-earth-doped tube 120 and the second refractive tube 140 forms a pure quartz layer 130.

Specifically, to prepare the first refractive tube 110, a pure quartz substrate tube is mounted on the PCVD equipment, and a germanium-doped quartz material is deposited on an inner wall of the pure quartz substrate tube. The refractive index profile of the germanium-doped quartz material exhibits a parabolic shape.

The pure quartz substrate tube on which the germanium-doped quartz material is deposited is cut and ground on a cylindrical grinding lathe. The grinding thickness is equal to the thickness of the pure quartz substrate tube. The surface roughness after grinding does not exceed Ra0.4. The remaining germanium-doped quartz material after grinding is the first refractive tube 110.

It should be noted that the refractive index of the outer wall of the first refractive tube 110 is greater than or equal to the refractive index of the rare-earth-doped tube 120.

S102, preparing an anti-resonant tube 200, and assembling the anti-resonant tube 200 with the first refractive tube 110 to obtain a primary preform.

Specifically, a drawn capillary (i.e., the anti-resonant tube 200) and the first refractive tube 110 are assembled by a stacking method to form a nested capillary structure, and are then welded on a glass lathe using an oxyhydrogen flame, a graphite furnace or other heat sources to obtain the primary preform.

It should be noted that the technique of drawing a capillary is well-known to those skilled in the art and will not be described in detail.

S103, drawing the primary preform into a hollow-core optical fiber intermediate.

Specifically, the primary preform is drawn on a graphite drawing furnace to form an intermediate, and a section of the obtained intermediate with stable dimension and structure is selected for use in assembly of a secondary preform.

S104, inserting the hollow-core optical fiber intermediate into the rare-earth-doped tube 120, and applying a negative pressure to the gap between the hollow-core optical fiber intermediate and the rare-earth-doped tube 120 to obtain a secondary preform.

Specifically, the hollow-core optical fiber intermediate is inserted into the rare-earth-doped sleeve and assembled with an air-filled mold to ensure that negative pressure can be drawn in the gap between the hollow-core optical fiber intermediate and the rare-earth-doped sleeve, so as to obtain the secondary preform.

It should be noted that the fiber core region 300 of the hollow-core optical fiber intermediate as well as an inner tube and an outer tube of the nested capillary can be independently air-filled, and the gap between the air-filling tube and the secondary preform is fully sealed by applying a high-temperature resistant adhesive.

S105, drawing the secondary preform into a rare-earth-doped anti-resonant hollow-core optical fiber.

Specifically, the assembled secondary preform is placed on a drawing tower for drawing. The negative pressure is applied between the hollow-core optical fiber intermediate and the rare-earth-doped sleeve. The dimension and wall thickness of the tubular element are controlled by adjusting three independent air-filling pressure values of the fiber core region 300 of the hollow-core optical fiber, and the inner tube and the outer tube of the nested capillary, thereby forming a nested anti-resonant ring tube structure. Subsequently, through a coating and curing device, with the inner coating layer 150 being a fluorine-doped acrylic resin and the outer coating layer 150 being a conventional acrylic resin, the rare-earth-doped anti-resonant hollow-core optical fiber is obtained by drawing.

It should be noted that in the rare-earth-doped anti-resonant hollow-core optical fiber and its preparation method provided by the present application, the anti-resonant tube 200 of the hollow-core optical fiber is prepared from a pure quartz tube by a stacking method, the rare-earth-doped tube 120 is prepared by the MCVD method, and the second refractive tube 140 is prepared by the PCVD method. The preparation processes are simple and mature, enabling low transmission loss. No special processing procedure is required, and the preparation cost is low.

In some embodiments, referring to FIG. 1, in an ytterbium-doped anti-resonant hollow-core optical fiber prepared according to the above preparation method of the rare-earth-doped anti-resonant hollow-core optical fiber, the anti-resonant tube 200 has a structure of five nested circular rings. The outer wall of the second refractive tube 140 has a regular octagonal cross-section, the fiber core region 300 has a diameter of 30 µm, and the anti-resonant tube 200 has an outer ring diameter of 33 µm, an inner ring diameter of 16 µm, and a wall thickness of 0.44 µm. The first refractive tube 110 has an inner diameter of 92.6 µm and an outer diameter of 115 µm. The rare-earth-doped tube 120 has an outer diameter of 168 µm. The pure quartz layer 130 has an outer diameter of 206 µm. The distance between two opposite edges of the second refractive tube 140 is 220 µm. The first coating layer 151 has an outer diameter of 262 µm, and the second coating layer 152 has an outer diameter of 295 µm.

Referring to FIG. 2, the rare-earth-doped tube 120 has a concentration of element ytterbium of 2000 ppm, and its refractive index difference relative to the pure quartz layer 130 is 0.0020. The refractive index of the outer wall of the first refractive tube 110 is consistent with that of the rare-earth-doped tube 120. The refractive index of the second refractive tube 140 is 0.015 lower than that of the pure quartz layer 130. The refractive index of the first coating layer 151 is 0.084 lower than that of pure quartz.

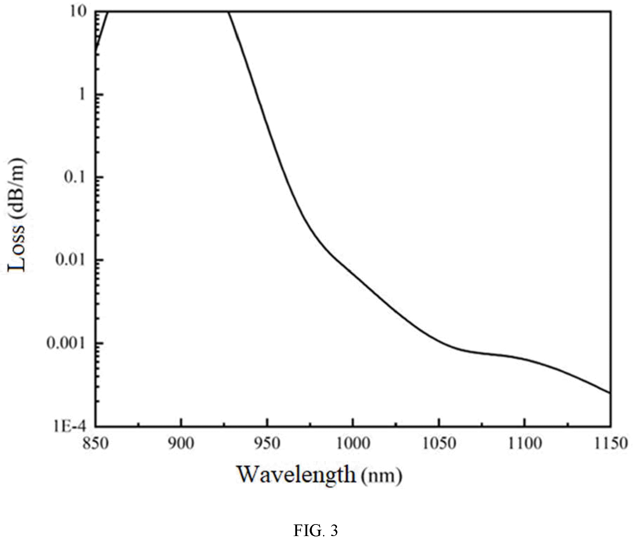

According to test, referring to FIG. 3, the ytterbium-doped anti-resonant hollow-core optical fiber exhibits a transmission loss of 0.75 dB/km at a transmission light wavelength of 1064 nm, while the pump light wavelength of 915 nm falls entirely within a resonance band, indicating achievements of good excitation light transmission and suppression of pump light transmission. Laser output tests show that an optical-to-optical conversion efficiency is 68%, an absorption of the cladding 100 at 915 nm is 4.3 dB/m, no thermally induced mode instability occurs at high power of 10 kW during transmission, and no obvious photo-darkening phenomenon is observed after 400 hours of aging.

In some embodiments, referring to FIG. 1, in an erbium-doped anti-resonant hollow-core optical fiber prepared according to the above preparation method of the rare-earth-doped anti-resonant hollow-core optical fiber, the anti-resonant tube 200 has a structure of five nested circular rings. The outer wall of the second refractive tube 140 has a regular octagonal cross section, the fiber core region 300 has a diameter of 30 µm, and the anti-resonant tube 200 has an outer ring diameter of 33 µm, an inner ring diameter of 31.5 µm, and a wall thickness of 0.48 µm. The first refractive tube 110 has an inner diameter of 92.8 µm and an outer diameter of 120 µm. The rare-earth-doped tube 120 has an outer diameter of 185 µm. The pure quartz layer 130 has an outer diameter of 228 µm. The distance between two opposite edges of the second refractive tube 140 is 250 µm. The first coating layer 151 has an outer diameter of 300 µm, and the second coating layer 152 has an outer diameter of 340 µm.

Referring to FIG. 2, the rare-earth-doped tube 120 has a concentration of element erbium of 2500 ppm, and its refractive index difference relative to the pure quartz layer 130 is 0.0050. The refractive index of the outer wall of the first refractive tube 110 is consistent with that of the rare-earth-doped tube 120. The refractive index of the second refractive tube 140 is 0.015 lower than that of the pure quartz layer 130. The refractive index of the first coating layer 151 is 0.084 lower than that of pure quartz.

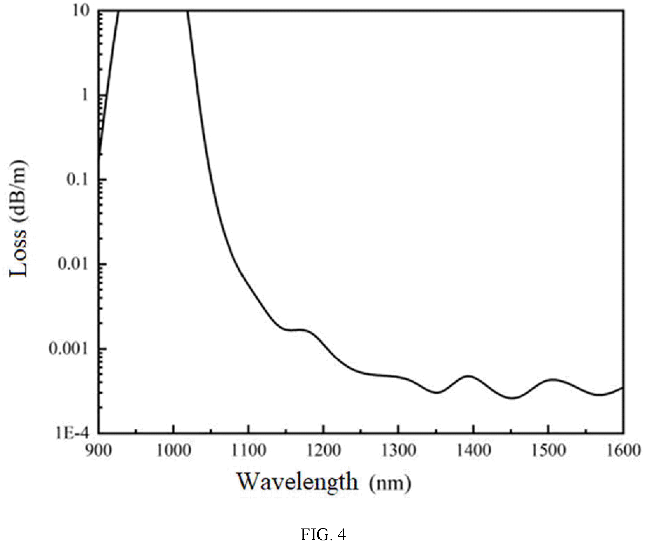

According to test, as shown in FIG. 4, the erbium-doped anti-resonant hollow-core optical fiber exhibits a transmission loss of 0.39 dB/km at a transmission light wavelength of 1530 nm, while the pump light wavelength of 980 nm falls entirely within the resonance band, indicating achievements of good excitation light transmission and suppression of pump light transmission. Laser output tests show that an optical-to-optical conversion efficiency is 40%, an absorption of the cladding 100 at 980 nm is 10.5 dB/m, and a laser output of 30 mW is achieved.

In some embodiments, referring to FIG. 1, in a thulium-doped anti-resonant hollow-core optical fiber prepared according to the above preparation method of the rare-earth-doped anti-resonant hollow-core optical fiber, the anti-resonant tube 200 has a structure of five nested circular rings. The outer wall of the second refractive tube 140 has a regular octagonal cross section, the fiber core region 300 has a diameter of 40 µm, and the anti-resonant tube 200 has an outer ring diameter of 49 µm, an inner ring diameter of 25 µm, and a wall thickness of 0.76 µm. The first refractive tube 110 has an inner diameter of 158 µm and an outer diameter of 185 µm. The rare-earth-doped tube 120 has an outer diameter of 240 µm. The pure quartz layer 130 has an outer diameter of 275 µm. The distance between two opposite edges of the second refractive tube 140 is 295 µm. The first coating layer 151 has an outer diameter of 340 µm, and the second coating layer 152 has an outer diameter of 380 µm.

Referring to FIG. 2, the rare-earth-doped tube 120 has a concentration of element thulium of 3000 ppm, and its refractive index difference relative to the pure quartz layer 130 is 0.015. The refractive index of the outer wall of the first refractive tube 110 is consistent with that of the rare-earth-doped tube 120. The refractive index of the second refractive tube 140 is 0.015 lower than that of the pure quartz layer 130. The refractive index of the first coating layer 151 is 0.084 lower than that of pure quartz.

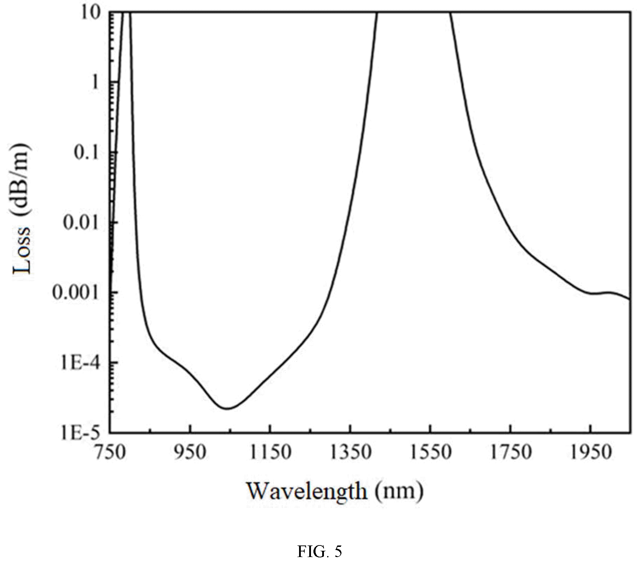

According to test, referring to FIG. 5, the thulium-doped anti-resonant hollow-core optical fiber exhibits a transmission loss of 0.88 dB/km at a transmission light wavelength of 1950 nm, while the pump light wavelength of 793 nm falls entirely within the resonance band, indicating achievements of good excitation light transmission and suppression of pump light transmission. Laser output tests show that an optical-to-optical conversion efficiency is 60%, an absorption of the cladding 100 at 793 nm is 15.7 dB/m, no thermally induced mode instability occurs at 1000 W power output, and no obvious photo-darkening phenomenon is observed after 400 hours of aging.

It can be understood by those skilled in the art that the rare-earth-doped anti-resonant hollow-core optical fiber provided by the present application is provided with a cladding 100 and a plurality of anti-resonant tubes 200, where the cladding 100 includes the first refractive tube 110 and the rare-earth-doped tube 120 sleeved on the first refractive tube 110, the plurality of anti-resonant tubes 200 are sequentially arranged at intervals on the inner wall of the first refractive tube 110, and the plurality of anti-resonant tubes 200 collectively enclose a fiber core region 300 which is used for laser transmission. Since the space inside the fiber core region 300 is filled with air, the fiber core region 300 can reduce nonlinear effects and ensure the stability of laser transmission. The rare-earth-doped tube 120 is used for amplifying the laser and can achieve laser gain. The first refractive tube 110 is used for coupling the amplified laser into the fiber core region 300, so that the laser propagates in the fiber core region 300, avoiding the laser propagating on the rare-earth-doped tube 120, thereby reducing the possibility of unstable propagation mode. Therefore, the rare-earth-doped anti-resonant hollow-core optical fiber provided by the present application can achieve laser gain and reduce the possibility of occurrence of mode instability during the process of laser transmission.

In the description of the present specification, the description with reference to the terms "an implementation", "some implementations", "illustrative implementations", "an example", "a specific example", or "some examples" is intended to mean that the specific features, structures, materials, or characteristics described in conjunction with the implementation or example are included in at least one implementation or example of the present application. In the present specification, the illustrative expressions of the above terms do not necessarily refer to the same implementation or example. Moreover, the described specific features, structures, materials, or characteristics may be combined in any one or more implementations or examples in a suitable manner.

It can be understood that various numerical designations involved in the embodiments of the present application are merely for convenience of description and are not intended to limit the scope of the embodiments of the present application.

So far, the technical solutions of the present application have been described in conjunction with the preferred implementations shown in the drawings. However, it is easy for those skilled in the art to understand that the protection scope of the present application is obviously not limited to these specific implementations. Without departing from the principles of the present application, those skilled in the art may make equivalent changes or replacements to the relevant technical features, and the technical solutions after these changes or replacements shall fall within the protection scope of the present application.

## Claims

1. A rare-earth-doped anti-resonant hollow-core optical fiber, comprising a cladding (100) and a plurality of anti-resonant tubes (200), wherein the cladding (100) comprises a first refractive tube (110) and a rare-earth-doped tube (120) sleeved on the first refractive tube (110);
the anti-resonant tubes (200) are sequentially arranged at intervals on an inner wall of the first refractive tube (110), and the anti-resonant tubes (200) collectively enclose a fiber core region (300), and the fiber core region (300) is configured to transmit laser;
the rare-earth-doped tube (120) is configured to amplify the laser, and the first refractive tube (110) is configured to couple the amplified laser into the fiber core region (300).

2. The rare-earth-doped anti-resonant hollow-core optical fiber according to claim 1, wherein an axial direction of each anti-resonant tube (200) is parallel to an axial direction of the first refractive tube (110), and the anti-resonant tubes (200) are sequentially and uniformly arranged at intervals around a circumferential direction of the first refractive tube (110).

3. The rare-earth-doped anti-resonant hollow-core optical fiber according to claim 1, wherein the first refractive tube (110) is a germanium-doped tube.

4. The rare-earth-doped anti-resonant hollow-core optical fiber according to claim 3, wherein a content of element germanium in the germanium-doped tube decreases gradually from an outer side to an inner side of the germanium-doped tube.

5. The rare-earth-doped anti-resonant hollow-core optical fiber according to any one of claims 1 to 4, wherein the anti-resonant tubes (200) are greater than or equal to 4 and less than or equal to 16 in number.

6. The rare-earth-doped anti-resonant hollow-core optical fiber according to any one of claims 1 to 4, wherein the cladding (100) further comprises a second refractive tube (140) and a coating layer (150), the second refractive tube (140) is sleeved on the rare-earth-doped tube (120), and the coating layer (150) is arranged on an outer surface of the second refractive tube (140);
a pure quartz layer (130) is provided between the rare-earth-doped tube (120) and the second refractive tube (140), and the second refractive tube (140) and the pure quartz layer (130) are configured to reflect pump light.

7. The rare-earth-doped anti-resonant hollow-core optical fiber according to claim 6, wherein the second refractive tube (140) is a fluorine-doped quartz tube.

8. The rare-earth-doped anti-resonant hollow-core optical fiber according to claim 7, wherein an outer wall of the fluorine-doped quartz tube is polygonal.

9. The rare-earth-doped anti-resonant hollow-core optical fiber according to claim 6, wherein the coating layer (150) comprises a first coating layer (151) and a second coating layer (152), and the first coating layer (151) is located on a side of the second coating layer (152) close to the second refractive tube (140).

10. The rare-earth-doped anti-resonant hollow-core optical fiber according to claim 9, wherein the first coating layer (151) is a fluorine-doped acrylic resin layer, and the second coating layer (152) is an acrylic resin layer.
